# EUROPEAN PATENT SPECIFICATION

(11) **EP 2 913 822 B1**
(45) Date of publication and mention of the grant of the patent: **07.12.2016**
(21) Application number: 15155688.3
(22) Date of filing: 19.02.2015
(51) Int. Cl.: G10L 17/04, G10L 15/18

(54) **Speaker recognition**
Sprechererkennung
Reconnaissance de locuteur

(30) Priority: 28.02.2014 GB 201403524
(43) Date of publication of application: 02.09.2015
(73) Proprietor: Nokia Technologies OY, 02610 Espoo (FI)
(72) Inventor: Lönnfors, Mikko, 00680 Helsinki (FI); Rainisto, Roope, 00730 Helsinki (FI)
(74) Representative: Tampereen Patenttitoimisto Oy

(56) References cited:
- WO-A1-2013/013290
- WO-A2-2012/096901
- US-A1- 2012 303 369

## Description

### Background

Today's computing devices and communication devices such as mobile phones are more and more used to conceptualize users and devices of users in their environment or to learn about users and devices of users with which they are communicated through some communication channel. They may receive information such as identification information directly from devices, for example, through Bluetooth (BL) or Bluetooth low energy (BTLE) wireless computer network or BT or BTLE can be used to automatically detect which devices are around. BT addresses of devices may have been arranged, for example to a certain phonebook. On the basis of specific BT addresses of devices around, the device can associate different devices around to specific identities arranged in context with the BT addresses in the phonebook i.e. the device may receive user information of the devices around from the phonebook on the basis of their BT addresses, such as names of the users around etc.

### Summary

Now there has been invented an improved method and technical equipment implementing the method, by which a device may recognize identity of users of devices in proximity, or into which the device is connected to. Procedures for recognizing identity of users are also known from WO 2012/096901 A2. Various aspects of the invention include a method, an apparatus, and a computer readable medium comprising a computer program stored therein, which are characterized by what is stated in the independent claims. Various embodiments of the invention are disclosed in the dependent claims.

According to a first aspect, there is provided a method comprising: monitoring voice, recognizing human speech in the monitored voice using a speech recognizing algorithm, detecting an identity of a person from the recognized human speech, interpreting the recognized human speech for identifying the portion of voice including voice of the person to whom the identity belongs; and generating an audio signature for that portion of voice.

According to an embodiment, the method further comprises generating the audio signature comprises extracting the portion of voice including voice of the person to whom the identity belongs. According to an embodiment, the method further comprises linking the identity with the audio signature. According to an embodiment, the method further comprises storing the audio signature to a database. According to an embodiment, the method further comprises: monitoring voice, extracting monitored voice for generating a second audio signature, comparing the second audio signature to audio signatures of the database, and indicating the identity of the person linked to the audio signature corresponding to the second audio signature. According to an embodiment, indicating is done by displaying the identity of the person on a display of a device. According to an embodiment, indicating is done by a message indicating presence of the person. According to an embodiment, the monitoring of voice is done by microphone. According to an embodiment, the monitoring of voice is done through a communication channel. According to an embodiment, the monitored voice is voice of a multimedia storage media.

According to a second aspect, there is provided an apparatus comprising at least one processor, memory including computer program code, the memory and the computer program code configured to, with the at least one processor, cause the apparatus to perform at least the following: monitor voice, recognize human speech in the monitored voice using a speech recognizing algorithm, detect an identity of a person from the recognized human speech, interpret the recognized human speech for identifying the portion of voice including voice of the person to whom the identity belongs; and generate an audio signature for that portion of voice.

According to an embodiment, the apparatus generates the audio signature by extracting the portion of voice including voice of the person to whom the identity belongs. According to an embodiment, the apparatus is further caused to link the identity with the audio signature. According to an embodiment, the apparatus is further caused to store the audio signature to a database. According to an embodiment, the computer program code is further configured to cause the apparatus to: monitor voice, extract monitored voice for generating a second audio signature, compare the second audio signature to audio signatures of the database, and indicate the identity of the person linked to the audio signature corresponding to the second audio signature. According to an embodiment, the indication is done by displaying the identity of the person on a display of a device. According to an embodiment, the indication is done by a message indicating presence of the person. According to an embodiment, the voice is monitored by microphone. According to an embodiment, the voice is monitored through a communication channel. According to an embodiment, the monitored voice is voice of a multimedia storage media.

According to a third aspect, there is provided a computer program product embodied on a non-transitory computer readable medium, comprising computer program code configured to, when executed on at least one processor, cause an apparatus to: monitor voice, recognize human speech in the monitored voice using a speech recognizing algorithm, detect an identity of a person from the recognized human speech, interpret the recognized human speech for identifying the portion of voice including voice of the person to whom the identity belongs; and generate an audio signature for that portion of voice.

According to an embodiment, the apparatus generates the audio signature by extracting the portion of voice including voice of the person to whom the identity belongs. According to an embodiment, the apparatus is further caused to link the identity with the audio signature. According to an embodiment, the apparatus is further caused to store the audio signature to a database. According to an embodiment, the computer program code is further configured to cause the apparatus to: monitor voice, extract monitored voice for generating a second audio signature, compare the second audio signature to audio signatures of the database, and indicate the identity of the person linked to the audio signature corresponding to the second audio signature. According to an embodiment, the indication is done by displaying the identity of the person on a display of a device. According to an embodiment, the indication is done by a message indicating presence of the person. According to an embodiment, the voice is monitored by microphone. According to an embodiment, the voice is monitored through a communication channel. According to an embodiment, the monitored voice is voice of a multimedia storage media.

According to a fourth aspect, there is provided an apparatus comprising: means for monitor voice, means for recognize human speech in the monitored voice using a speech recognizing algorithm, means for detect an identity of a person from the recognized human speech, means for interpret the recognized human speech for identifying the portion of voice including voice of the person to whom the identity belongs; and means for generate an audio signature for that portion of voice.

### Description of the Drawings

In the following, various embodiments of the invention will be described in more detail with reference to the appended drawings, in which
- Fig. 1a: shows an example of use of an automatic identity recognition method according to an example embodiment;
- Fig. 1b: shows an example of use of an automatic identity recognition method according to an example embodiment;
- Fig. 2: shows a base device according to an example embodiment;
- Fig. 3: shows a flow chart of an automatic identity recognition method according to an example embodiment; and
- Fig. 4: shows a flow chart of a sequel of the automatic identity recognition method according to an example embodiment.

### Description of Example Embodiments

In conference calls or in environment with a lot of people it may be difficult to keep up with who the person speaking at the moment is. Keeping up may be even harder when the people involved are unfamiliar to each other. Possible ways to overcome this inconvenience is mentioned in the background part of the description. These methods may give identities of those involved in conference calls or in proximity, but they may not indicate who the person speaking is. In this context the term "involved" means persons participating in the discussion in proximity or through some communication channel, for example, mobile phone network, internet etc. or through conference call or VoIP call etc. Whereas, involved devices are devices of involved persons.

Instead of transferring identity information of participating persons for identifying involved persons through Bluetooth networks or some other channel, it is possible to use a device(s) such as mobile device(s) to automatically recognize identities of the persons who are involved in discussion i.e. speaking in close proximity or through some communication channel. In automatic identity recognition method the device may use human interactions, discussions, speech, to identify persons involved in the discussion. The device may use speech recognition (SR) method, algorithm, to the discussion i.e. the device translates spoken words of the discussion into text. If the speech-to-text-translated word is recognized to be a name, the device continues to analyze the sentence wherein the name appeared to see if the sentence or speech near the name is such that it is probable to identify to whom the name belongs. For example, is the mentioned name, a name of the person who speaks next or a name of the person who is currently speaking.

For speech recognition of discussion, speech, it is possible to use any existing speech recognition algorithm, for example, Natural Language Processing (NLP) method, Discourse analysis, or parse tree. If after analysing the content of the sentence the device determines a voice to which the name belongs, the device may generate an audio signature by extracting the portion of voice including voice of the person to whom the identity belongs, for example, some know audio fingerprint extraction algorithm. An audio signature is a digital represent of a person's typical audio pattern that is unique for each individual person. People's speech is typically unique and it can be differentiated from other people. For example, people pronounce different letters differently and using different timing and frequency. Audio pattern is a combination of these typical characteristics in digital format. This digital format can then be used to match different audio signatures against it. The audio signature may base on projections of a coarse representation of the spectrogram onto random vectors. The device may combine the name of the person to whom the voice of audio signature belongs to the audio signature, for example, by linking the name or some other metadata to the audio signature. Further the device may store the audio signature in a database of audio signatures locating its memory, cloud or any other suitable location. In other words, the device collects audio signatures which are labelled by identity information, for example, by a name of a person to whom a voice of a voice sample belongs to.

The device may use existing name lists for detecting names from the speech recognized speech. Existing name lists may have been stored in the memory of the device itself or a server or cloud. It may also be possible to use any other method to spot names for involved persons from the speech recognized speech than using name lists. For example, if an unknown word(s) or irrelevant word(s) exist frequently before the same speaker or during a speech of the same speaker, the device may recognize this word as an identity of a person. This kind of identity could be in addition to a name, for example, a nickname, a slogan or an expletive. In other words, names, nicknames, slogans and expletives are just examples of identifies of persons that can be used to identified and labelled voices.

The device may also use existing sentence lists or speech interpretation method, algorithm, to recognize if the speech recognized sentences, wherein the name or some other found identity of a person appeared, are such that it is probable to identify to whom the name or identity belongs. It is also possible that the device uses some other existing analysing method for analysing the sentence in order to determine if it includes the probability that the mentioned name or identity belongs to the current or next speaker i.e. the device interprets the speech for identifying the portion of voice including voice of the person to whom the name or identity belongs. The next speaker is a subsequent speaker that is, for example, answering to the current speaker. On the basis of social conventions and rules existing in languages, it is possible to determine whether it is at least more or less probable that the name or identity mentioned in the sentence belongs to a person who currently speaks or who speaks next. Recognition event, wherein the device comes to a conclusion to whom the mentioned name belongs may be called a positive identification.

It is also possible that the device makes more than one positive identifications i.e. recognizes more than once that a certain identity of a person belongs to a certain voice before it generates an audio signature for that voice. In addition, it is also possible that devices of all involved persons transmit their identity information to a device performing the automatic identity recognition method. From the received identity information the device may determine, for example, names of involved persons and it may use those names when searching names from the speech recognized speech. This means that the device may only search for names of involved persons from the speech recognized speech instead of all possible names. It is also possible that the device starts the sentence analysis only when a name of involved persons exists in the speech.

Generated audio signature(s) may be utilized later on. The device may allow a user to recognize, identify, audio signals comprising a sample of human voice, wherein the sample of human voice is a voice of person speaking or singing currently nearby or a voice received through some connection or a voice of person which voice has been recorded, taped or filmed. The device may recognize the sample of human voice over a large database of audio signatures. Corresponding identification method of audio samples is used for music reorganization, such methods are, for example, SoundHound and Shazam. For example, when the device receives audio signals trough microphones, it may generate a second audio signature of received audio signals and compare the second audio signature to audio signatures stored in its memory, or in a server or in a cloud or in any other location. If on the basis of comparison the second audio signature corresponds to an audio signature, the device may indicate the name of the voice linked to that audio signature when the person of that audio signature speaks the next time. The device may indicate the name, for example, in the display of the device while the person speaks. It is also possible to speak or type the name of the recognized person i.e. identity linked to the audio signature corresponding to the second audio signature. It is also possible that information about recognized persons i.e. identities are stored in a log file comprising information about recognized persons and time of reorganizations or a presence information of recognized persons or that information about persons to whom the recognized voice of the audio signatures belong to is presented, for example, by displaying, typing or speaking by a Telco program. The Telco program may also store this information.

Examples of sentences where it would be likely for a person whose name "James" was recognized by a speech recognition algorithm from discussion, to speak back next:
"Hi James, how did you weekend go?"
"James!"
"It went fine... Or what do you think, James?"

Examples of sentences where it would not be likely for James to speak back next:
"And then I saw James running to the bus..."
"Yes, James, Bill and Matthew were all there..."

Further, if devices are broadcasting the identities of the users, this information may be used to prime the device. If the phone knows that James Barrow is now near the user, when the name "James" is said, there is a much higher likelihood that it refers to this particular James Barrow vs. some other James. Also, if James is in the room right now, the likelihood of James speaking back when his name is mentioned is naturally higher.

In the following, several embodiments of the invention will be described in the context of an apparatus for performing the automatic identity recognition method for involved persons in proximity of the apparatus or connected to the apparatus via a network. It is to be noted, however, that the invention is not limited to mobile devices. In fact, the different embodiments have applications in any environment where identifying of persons is needed. In embodiments of the invention, the apparatus performing the automatic identity recognition method may be generally referred to as a base device.

A base device or a device used by an involved person may be a mobile device or any other device suitable to be used for speaking communication between devices. The device or the base device may be, for example, a mobile phone, a mobile computer, a mobile collaboration device, a mobile internet device, a smart phone, a tablet computer, a tablet personal computer (PC) or a personal digital assistant.

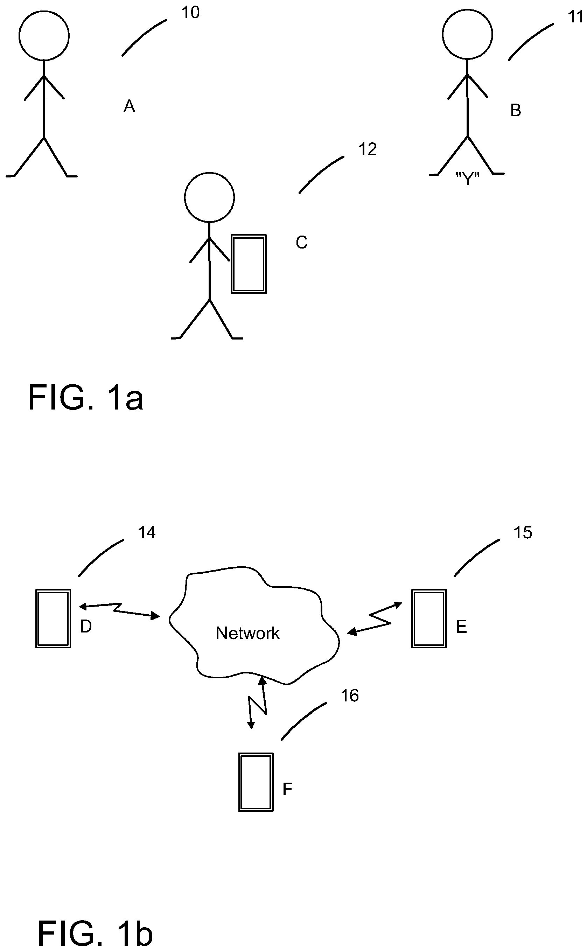

Figure 1a shows an example of an automatic identity recognition situation, wherein persons are nearby a base device according to an example embodiment. The automatic identity recognition situation shown in figure 1a is based on natural human interaction i.e. speech communication of person A 10, person B 11, and person of device C 12. The device C 12 is so called base device and it uses the automatic identity recognition method for identifying persons A 10 and B 11. The automatic identity recognition situation may proceed as follows:

Person A 10 says: "Hi Y - what are you doing ...." The device C 12 uses speech recognition algorithm to said sentence and recognizes word Y as a name "Y" from what is being said. After recognizing the name "Y" the device C 12 analyzes i.e. interprets the speech recognized sentence, wherein the name "Y" appeared for identifying the portion of voice including voice of the "Y". If the analysis reveals a probable identification i.e. that it is socially probable that the sentence is of the type where it would be expected for "Y" to answer to the person A 10, the device C 12 determines that the person A 10 is addressing person Y (that is the person B 11).

When analysis i.e. interpretation is done a couple of times, and if every or at least most of the analysis indicates probable identifications i.e. that the "Y" is the name for a voice speaking next, the device C 12 may generate an audio signature for the voice of the person "Y" by extracting the Y's voice, for example, by an audio fingerprinting algorithm. The device C 12 may further link the name "Y" to the generated audio signature. It is also possible to form the audio signature on the basis of one analysis indicating that the mentioned name "Y" is probably the name of the next speaker. But if analysis is done more than once with positive identification, faulty audio signatures may be avoided i.e. filtered.

The identification of Y may be further enhanced if devices of involved persons A 10 and B 11 have broadcasted their user's identities to the device C 12 performing the automatic identity recognition method, for example, by Bluetooth. When names of involved persons are known, it may be much easier for the device C 12 to accurately recognize the voice as belonging to person named "Y", because at least the person with that name is involved. It is also possible that the device C 12 uses BT addresses of devices of persons A 10 and B 11 to figure out names of their persons A 10 and B 11.

In the future, when the device C 12 or any other device is arranged to recognize an identity of streaming audio, it generates an audio signature to be compared of the streaming audio and compares this audio signature to be compared to audio signatures in database(s).For example, when the person B 11 i.e. Y speaks (person Y's voice is heard through microphones or through some communication channel of the device C 12), the device C 12 may generate an audio signature to be compared of Y's voice and compare this audio signature to be compared to existing audio signatures in database, and if the device C 12 recognizes that the audio signature to be compared corresponds to an audio signature wherein the name "Y" has been linked to (i.e. that the voice belongs to Y), the device may indicate for its user that Y is currently speaking.

The device C 12 may continue the automatic identity recognition by identifying also person A 10; the device C 12 may also identify persons A 10 and B 11 in parallel during the discussion. In addition, it is also possible that a device of person A 10 or B 11 further performs the automatic identity recognition method for identifying persons of other devices similarly as the device C 12 above.

Figure 1b shows an example of an automatic identity recognition situation, wherein devices are connected to a base device via a mobile phone network according to an example embodiment. The automatic identity recognition situation is based on natural human interaction i.e. speech communication of users of device D 14, device E 15, and device F 16. The device F 16 is a so-called base device and it uses the automatic identity recognition method for identifying users of device D 14 and E 15. The automatic identity recognition situation may proceed as follows:
User of the device D 14 says: "Hello, I am Jane - Did you have a nice weekend? ...." The device F 16 uses speech recognition algorithm to said sentence and recognizes word Jane as a name "Jane" from what is being said. After recognizing the name "Jane" the device F 16 analyzes i.e. interprets the speech recognized sentence, wherein the name "Jane" appeared. If the analysis reveals a probable identification i.e. the device F 16 identifies the portion of voice including voice of "Jane" i.e. that it is socially probable that the sentence is of the type where it would be expected that "Jane" is the current speaker.

When analysis is done a couple of times, and if every or at least most of the analysis indicates probable identifications which voice belongs to Jane is, the device F 16 may generate an audio signature for the voice of person "Jane". The device F 16 may associate i.e. link name Jane to "Jane's" audio signature as a metadata. It is also possible to form the audio signature on the basis of one analysis indicating that the mentioned name "Jane" is probably the name of the current speaker. But if analysis is done more than once with positive identification, faulty audio signatures may be avoided i.e. filtered.

The identification of Jane may be further enhanced if involved device D 14 and E 15 have broadcasted their user's identities to the device F 16 performing the automatic identity recognition method, for example, by Bluetooth. When names are known, it may be much easier for the device F 16 to accurately recognize the voice as belonging to a person named "Jane", because at least the person with that name is involved. It is also possible that the device F 16 uses BT addresses of devices D 14 and E 15 to figure out names of their users.

In the future, the device F 16 may recognize the voice of Jane by generating an audio signature to be compared of voice it is monitoring and by comparing the audio signature to be compared to audio signatures in database including Jane's audio signature. And if the device finds correspondence i.e. the audio signature to be compared corresponds to Jane's audio signature, it may then indicate that the user of device D 14 i.e. Jane speaks.

The device F 16 may continue the automatic identity recognition by identifying also the user of device E 15, the device F 16 may also identify users of devices D 14 and E 15 in parallel during the discussion. In addition, it is also possible that the device D 14 or E 15 further performs the automatic identity recognition method for identifying users of other devices similarly as the device F 16 above.

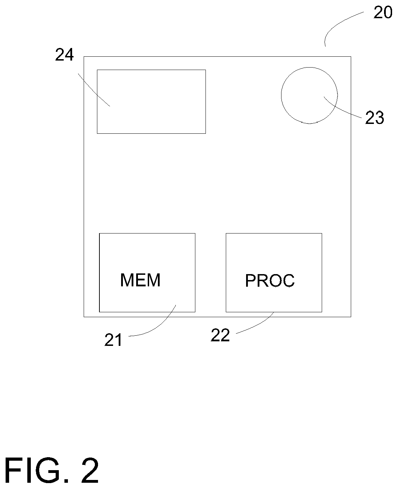

Figure 2 shows an example of a base device 20 according to an example embodiment. The apparatus 20 comprises a memory 21 configured to store computer program code used for identifying involved persons or users of involved devices by using speech recognition and for generating audio signatures for identified persons or users of involved devices. Further, it is possible to store generated audio signature to the memory 21. The apparatus 20 comprises a processor 22 that executes the program code to perform the apparatus' functionality. The apparatus 20 further comprises a microphone 23 to receive audio signals. The apparatus 20 may also comprise a communication interface 24 configured to connect the apparatus 20 to another device(s), via wireless and/or wired network, and to receive and/or transmit data by said wireless/wired network.

The apparatus 20 may further have one or more physical buttons or one or more touch-screen buttons. The apparatus 20 may further comprise a keypad being provided either on the display as a touch-screen keypad or on the housing of the apparatus as a physical keypad (not shown). The apparatus 20 may further comprise a loudspeaker (not shown) to transmit audio. The apparatus 20 may further comprise a display and an input/output element to provide e.g. user interface views to the display or messages for the user about persons currently speaking and recognized by using audio signatures. Further the apparatus 20 may comprise a loudspeaker to provide audio messages for the user about person currently speaking.

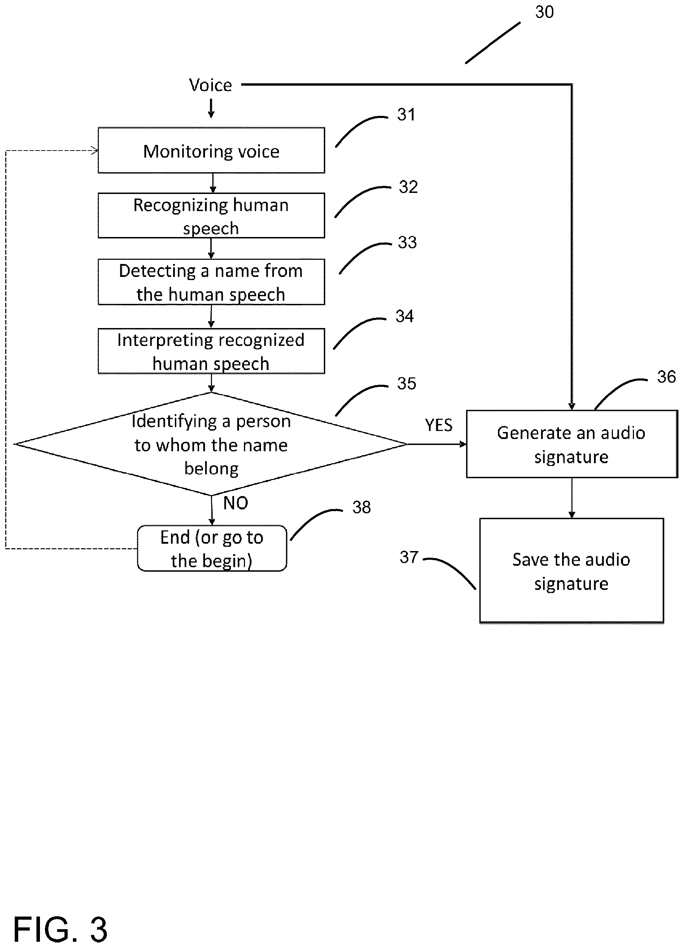

Figure 3 shows a flow chart of an automatic identity recognition method 30 according to an example embodiment. In the method 30, in step 31, a base device monitors voice. In step 32, the base device recognizes human speech in the monitored voice using. The human speech may be speech of one involved person, wherein the person is near the device or his/hers device is connected to the base device, for example, through mobile phone network, internet etc. so that the microphone of the base device is capable of monitoring the voice. In step 33, the base device detects a name from the recognized human speech. In step 34, the base device interprets the recognized human speech, for example, it interprets the content of the sentence where the name exists or speech near the name. In step 35, the base device is identifying from the recognized human speech, when the monitored voice contains voice of a person to whom the name belongs i.e. the base device identifies the portion of voice including voice of the person to whom the identity belongs (for example, is the person who the name belongs speaking next or is the person currently speaking etc.). If the base device identifies the portion of voice including voice of the person to whom the identity belongs, the method continues to step 36. In step 36, the base device generates an audio for that identified portion of voice. The audio signature may be generated by extracting the portion of voice including voice of the person to whom the identity belongs, for example, some know audio fingerprint extraction algorithm. In this step 36, it is also possible to link the identity of the person to whom the voice belongs with the audio signature or to some other meta-data relevant to the voice. In step 37, the base device stores the audio signature, for example, into its memory, such as in a phonebook, or in Facebook, cloud etc. Whereas, if the base device, in step 36, does not identify from the recognized human speech when monitored voice contains voice of the person who the name belongs, the method continues to step 38. In step 38, the method ends or it may continue back to step 31. Natural Language Processing (NLP) algorithm(s) may be used in step 32 for recognizing speech, in step 33 for detecting a name(s) from the speech (i.e. for Named-entity recognition (NER)) and in step 34 for interpreting the speech (i.e. do discourse analysis).

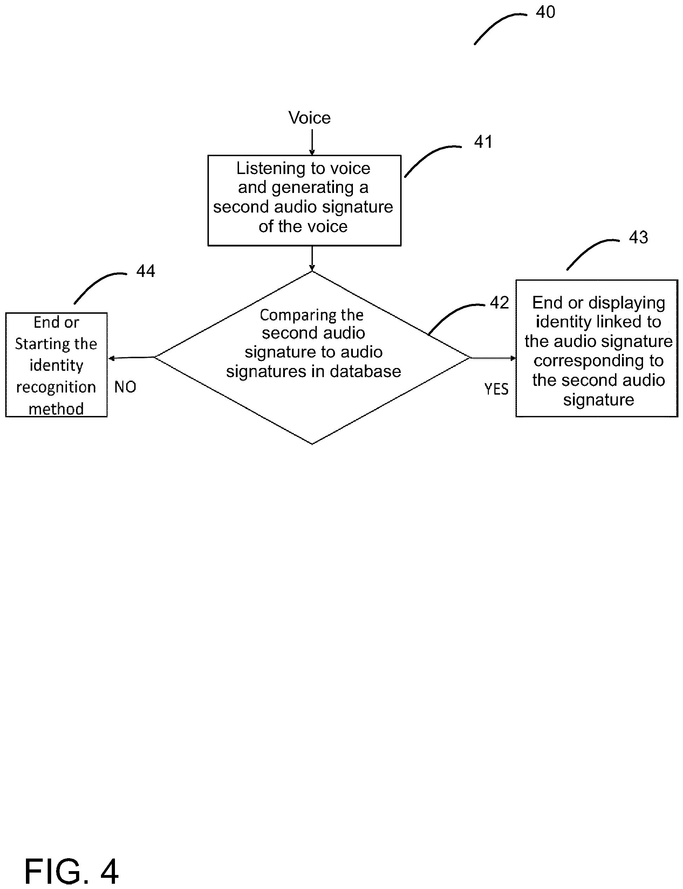

Figure 4 shows a flow chart of a possible sequel of the automatic identity recognition method according to an example embodiment. In the method 40, in step 41, the base device listens to i.e. monitors human voice and generates a second audio signature of the human voice (of the surrounding audio). The human voice may be human speech of some person. The some person may be a so-called involved person i.e. the base device may be near the person or the person's device may be connected to the base device, for example, through mobile phone network, internet etc. so that the microphone of the base device is capable of monitoring the voice or the person may be some random speaking person. In addition, the listened human voice may be voice of a multimedia storage media. The multimedia storage media may be, for example, a video clip, YouTube video, cd, DVD, Blue-Ray disc etc. instead of voice of involved persons. In step 42, the base device compares the second audio signature to existing audio signatures, for example, in its memory or cloud or in other suitable location. If the base device finds an equivalent i.e. correspondence, the method continues to step 43. In step 43, the method ends or the base device displays the name of the voice of the equivalent audio signature, which corresponds to the second audio signature, for example, in its display. If the base device does not find an equivalent in step 42, the method continues to step 44. In step 44, the method ends or the base device may start the identity recognition method 30 of figure 3.

The various embodiments of the automatic identity recognition method may provide, for example, the following advantages: a base device may automatically associate identities to an audio signature. There is no need for manual interaction. The automatic identity recognition method works as humans do, its functioning is easy to understand. The method takes advantage of language processing and its basic technology, such as speech recognition, exists. The method may take advantage of profiles indicated by nearby devices or devices connected to the base device through some communication channel, for example, by using Awarenet or BT, BT LE. The base device may listen/monitor audio field, receive audio signal, compare the audio signal to existing audio signatures and if they correspond, the base device may indicate the identity of the audio signal (name for a voice etc.).

It should also be noted that it is possible to use the automatic identity recognition method also in situations, where persons are discussing without devices. This kind of situation may be, for example, a meeting with a large group, exhibition, conference or workshop situation.

The number of involved persons or users of devices is not restricted in anyway. There could be only one person for whom the base device generates an audio signature or two or up to any number.

The various embodiments of the invention can be implemented with the help of computer program code that resides in a memory and causes the relevant apparatuses to carry out the invention. For example, a base device may comprise circuitry and electronics for handling, receiving and transmitting data, computer program code in a memory, and a processor that, when running the computer program code, causes the device to carry out the features of an embodiment.

It is obvious that the present invention is not limited solely to the above-presented embodiments, but it can be modified within the scope of the appended claims.

## Claims

1. A method comprising:
monitoring voice,
recognizing human speech in the monitored voice using a speech recognizing algorithm,
detecting an identity of a person from the recognized human speech,
interpreting the recognized human speech for identifying the portion of voice including voice of the person to whom the identity belongs; and
generating an audio signature for that portion of voice.

2. A method according to claim 1, wherein generating the audio signature comprises extracting the portion of voice including voice of the person to whom the identity belongs.

3. A method according to claim 1 or 2, wherein the method further comprises linking the identity with the audio signature.

4. A method according to claim 1 or 3, wherein the method further comprises storing the audio signature to a database.

5. A method according to any of the claims 1 to 4, wherein the method further comprises:
monitoring voice,
extracting monitored voice for generating a second audio signature,
comparing the second audio signature to audio signatures of the database, and
indicating the identity of the person linked to the audio signature corresponding to the second audio signature.

6. A method according to claim 5, wherein indicating is done by displaying the identity of the person on a display of a device.

7. A method according to claim 5, wherein indicating is done by a message indicating presence of the person.

8. A method according to any of the claims 1 to 7, wherein the monitoring of voice is done by microphone.

9. A method according to any of the claims 1 to 7, wherein the monitoring of voice is done through a communication channel.

10. A method according to any of the claims 1 to 9, wherein the monitored voice is voice of a multimedia storage media.

11. An apparatus comprising at least one processor, memory including computer program code, the memory and the computer program code configured to, with the at least one processor, cause the apparatus to perform a method of any of claims 1 to 10.

12. An apparatus according to claim 11, wherein the apparatus is a mobile device.

13. A computer program product embodied on a non-transitory computer readable medium, comprising computer program code configured to, when executed on at least one processor, cause an apparatus to perform a method of any of claims 1 to 10.

14. A computer program product according to claim 13, wherein the apparatus is a mobile device.

15. An apparatus comprising:
means for monitoring voice,
means for recognizing human speech in the monitored voice using a speech recognizing algorithm,
means for detecting an identity of a person from the recognized human speech, means for interpreting the recognized human speech for identifying the portion of voice including voice of the person to whom the identity belongs; and means for generating an audio signature for that portion of voice.

## Patentansprüche

1. Verfahren, umfassend:
Überwachen einer Stimme,
Erkennen menschlicher Sprache in der überwachten Stimme unter Verwendung eines Spracherkennungsalgorithmus,
Detektieren einer Identität einer Person aus der erkannten menschlichen Sprache,
Interpretieren der erkannten menschlichen Sprache zum Identifizieren der Anteils der Stimme, die die Stimme der Person enthält, zu der die Identität gehört; und
Erzeugen einer Audiosignatur für diesen Anteil der Stimme.

2. Verfahren nach Anspruch 1, wobei Erzeugen der Audiosignatur umfasst, den Anteil der Stimme zu extrahieren, die die Stimme der Person enthält, zu der die Identität gehört.

3. Verfahren nach Anspruch 1 oder 2, wobei das Verfahren ferner umfasst, die Identität mit der Audiosignatur zu verknüpfen.

4. Verfahren nach Anspruch 1 oder 3, wobei das Verfahren ferner umfasst, die Audiosignatur in einer Datenbank zu speichern.

5. Verfahren nach einem der Ansprüche 1 bis 4, wobei das Verfahren ferner umfasst:
Überwachen einer Stimme,
Extrahieren der überwachten Stimme zum Erzeugen einer zweiten Audiosignatur,
Vergleichen der zweiten Audiosignatur mit Audiosignaturen der Datenbank, und
Angeben der Identität der Person, die mit der Audiosignatur verknüpft ist, die mit der zweiten Audiosignatur korrespondiert.

6. Verfahren nach Anspruch 5, wobei Angeben durch Anzeigen der Identität der Person auf einer Anzeige einer Vorrichtung erfolgt.

7. Verfahren nach Anspruch 5, wobei Angeben durch eine Nachricht erfolgt, die die Anwesenheit der Person angibt.

8. Verfahren nach einem der Ansprüche 1 bis 7, wobei das Überwachen der Stimme durch ein Mikrofon erfolgt.

9. Verfahren nach einem der Ansprüche 1 bis 7, wobei das Überwachen der Stimme durch einen Kommunikationskanal erfolgt.

10. Verfahren nach einem der Ansprüche 1 bis 9, wobei die überwachte Stimme die Stimme eines Multimedien-Speichermediums ist.

11. Gerät, umfassend mindestens einen Prozessor, Speicher, der Computerprogrammcode enthält, wobei der Speicher und der Computerprogrammcode konfiguriert sind, mit dem mindestens einen Prozessor zu bewirken, dass das Gerät ein Verfahren nach einem der Ansprüche 1 bis 10 durchführt.

12. Gerät nach Anspruch 11, wobei das Gerät eine Mobilvorrichtung ist.

13. Computerprogrammprodukt, verkörpert in einem nichtflüchtigen computerlesbaren Medium, umfassend Computerprogrammcode, der konfiguriert ist, wenn er in mindestens einem Prozessor ausgeführt wird, zu bewirken, dass ein Gerät ein Verfahren nach einem der Ansprüche 1 bis 10 durchführt.

14. Computerprogrammprodukt nach Anspruch 13, wobei das Gerät eine Mobilvorrichtung ist.

15. Gerät, umfassend:
Mittel zum Überwachen einer Stimme,
Mittel zum Erkennen menschlicher Sprache in der überwachten Stimme unter Verwendung eines Spracherkennungsalgorithmus,
Mittel zum Detektieren einer Identität einer Person aus der erkannten menschlichen Sprache,
Mittel zum Interpretieren der erkannten menschlichen Sprache zum Identifizieren der Anteils der Stimme, die die Stimme der Person enthält, zu der die Identität gehört; und
Mittel zum Erzeugen einer Audiosignatur für diesen Anteil der Stimme.

## Revendications

1. Procédé comprenant les étapes suivantes :
contrôler une voix,
reconnaître un discours humain dans la voix contrôlée en utilisant un algorithme de reconnaissance vocale,
détecter une identité d'une personne à partir du discours humain reconnu,
interpréter le discours humain reconnu pour identifier la partie de voix comportant la voix de la personne à qui l'identité appartient ; et
générer une signature audio pour cette partie de voix.

2. Procédé selon la revendication 1, dans lequel l'étape consistant à générer la signature audio comprend : extraire la partie de voix comportant la voix de la personne à qui l'identité appartient.

3. Procédé selon la revendication 1 ou 2, dans lequel le procédé comprend en outre : relier l'identité à la signature audio.

4. Procédé selon la revendication 1 ou 3, dans lequel le procédé comprend en outre : stocker la signature audio dans une base de données.

5. Procédé selon l'une quelconque des revendications 1 à 4, dans lequel le procédé comprend en outre :
contrôler une voix,
extraire une voix contrôlée pour générer une deuxième signature audio,
comparer la deuxième signature audio aux signatures audio de la base de données, et
indiquer l'identité de la personne reliée à la signature audio correspondant à la deuxième signature audio.

6. Procédé selon la revendication 5, dans lequel l'étape d'indication est effectuée en affichant l'identité de la personne sur un écran d'un dispositif.

7. Procédé selon la revendication 5, dans lequel l'étape d'indication est effectuée par un message indiquant la présence de la personne.

8. Procédé selon l'une quelconque des revendications 1 à 7, dans lequel l'étape de contrôle de la voix est effectuée par un microphone.

9. Procédé selon l'une quelconque des revendications 1 à 7, dans lequel l'étape de contrôle de la voix est effectuée par l'intermédiaire d'un canal de communication.

10. Procédé selon l'une quelconque des revendications 1 à 9, dans lequel la voix contrôlée est la voix d'un support de stockage multimédia.

11. Appareil comprenant au moins un processeur, une mémoire comportant un code de programme d'ordinateur, la mémoire et le code de programme d'ordinateur étant configurés pour amener, avec ledit processeur, l'appareil à exécuter un procédé selon l'une quelconque des revendications 1 à 10.

12. Appareil selon la revendication 11, dans lequel l'appareil est un dispositif mobile.

13. Produit programme d'ordinateur stocké sur un support non transitoire lisible par ordinateur, comprenant un code de programme d'ordinateur configuré pour amener, lorsqu'il est exécuté sur au moins un processeur, un appareil à mettre en oeuvre un procédé selon l'une quelconque des revendications 1 à 10.

14. Produit programme d'ordinateur selon la revendication 13, dans lequel l'appareil est un dispositif mobile.

15. Appareil comprenant :
des moyens permettant de contrôler une voix,
des moyens permettant de reconnaître un discours humain dans la voix contrôlée en utilisant un algorithme de reconnaissance vocale,
des moyens permettant de détecter une identité d'une personne à partir du discours humain reconnu,
des moyens permettant d'interpréter le discours humain reconnu pour identifier la partie de voix comportant la voix de la personne à qui l'identité appartient ; et
des moyens permettant de générer une signature audio pour cette partie de voix.
